# EUROPEAN PATENT APPLICATION

(11) **EP 4 700 255 A1**
(43) Date of publication of application: **25.02.2026**
(21) Application number: 23934110.0
(22) Date of filing: 21.04.2023
(51) Int. Cl.: F16H 1/32

(54) **STRAIN WAVE GEAR DEVICE**

(71) Applicant: Harmonic Drive Systems Inc., Shinagawa-ku Tokyo 140-0013 (JP)
(72) Inventor: TERASHIMA, Tomoki, Azumino-shi, Nagano 399-8305 (JP)
(74) Representative: TBK
(86) International application number: PCT/JP2023/015926
(87) International publication number: WO 2024/218967

(57) **Abstract**

The strain wave gear device (4) is provided with a device housing (41), an internally toothed gear (42), and an annular gap portion (47) which is formed between an externally toothed gear (43) and a main bearing (46) and surrounds a cylindrical part (43a) of the externally toothed gear (43). In order to fill the gap portion (47), a gap-filling ring (48) made of a lightweight resin material is attached to the gap portion (47). By appropriately setting the contour shape of the gap-filling ring (48) and forming the gap-filling ring (48) using a material having a small unit volume weight, the gap portion (47) formed on the outer peripheral side of the externally toothed gear (43) is filled without causing unnecessary increase in mass such that unwanted stagnation of a lubricant can be prevented.

## Description

### TECHNICAL FIELD

The present invention relates to a strain wave gearing, and more specifically relates to a strain wave gearing that prevents the formation of lubricant pools that cause lubricant to accumulate on an outer peripheral side of a flexible externally toothed gear without increasing weight.

### BACKGROUND ART

Strain wave gearings generally used as reducers include unit-type strain wave gearings in which a rigid internally toothed gear and a flexible externally toothed gear are assembled inside a device housing interposed by a main bearing so as to be able to rotate relative to each other. Patent Documents 1 and 2 describe strain wave gearings of this type.

### Prior Art Documents

### Patent Documents

Patent Document 1: JP 2014-206265 A
Patent Document 2: JP 2022-10593 A

### DISCLOSURE OF THE INVENTION

### PROBLEMS TO BE SOLVED BY THE INVENTION

In a unit-type strain wave gearing, an internally toothed gear and a bearing are disposed in an axial direction across a predetermined gap on the outer peripheral side of an externally toothed gear inside a device housing. An annular gap surrounding the externally toothed gear is formed between the internally toothed gear and the main bearing. This annular gap communicates with the meshing portions of the internally toothed gear and the externally toothed gear. Circumferential-direction portions of the externally toothed gear are repeatedly caused to flex in a radial direction, so that a meshing state in which the externally toothed gear meshes with the internally toothed gear and an unmeshed state in which the meshing is released repeatedly occur. This operation causes a lubricant such as grease applied or filled in the meshing portions to flow out into the gap. The gap can become a lubricant pool where the flowed-out lubricant accumulates. If the gap has a high internal volume, the lubricant might pool unnecessarily therein, and the meshing portions, etc., will be improperly lubricated.

For this reason, in order to prevent the formation of a large gap, it is necessary to design parts of the members surrounding the gap, such as an aluminum device housing and a cast-iron internally toothed gear, so that said parts protrude in the axial direction and prevent a large gap from forming. However, filling the gaps with metal members leads to an increase in mass, which reduces the commercial viability of the product.

In view of the foregoing, it is an object of the present invention to provide a strain wave gearing configured to prevent the formation of a large gap that can become a lubricant pool on the outer peripheral side of the externally toothed gear, without causing any increase in mass.

### MEANS OF SOLVING THE PROBLEM

The strain wave gearing of the present invention is characterized by comprising:
a device housing;
a rigid internally toothed gear attached to the device housing;
a flexible externally toothed gear disposed inside the device housing and the internally toothed gear;
a wave generator that causes the externally toothed gear to flex in a radial direction and partially mesh with the internally toothed gear;
a main bearing that is fitted between the device housing and the externally toothed gear, and that supports the externally toothed gear so as to be able to rotate in relation to the device housing;
an annular gap portion that is formed between the device housing, the internally toothed gear, the externally toothed gear, and the main bearing, and that surrounds the externally toothed gear; and
a gap-filling member that is inserted in the gap portion in order to fill in the gap portion, and that is attached to at least one of the device housing and the internally toothed gear,
the gap-filling member being formed of an impermeable material that does not let through a lubricant applied or supplied to meshing portions of the internally toothed gear and the externally toothed gear and a sliding portion of the main bearing.

The gap-filling member is formed of a lightweight material such as a resin having a smaller weight per unit volume than the material of the device housing and the internally toothed gear. In addition, a hollow member or a member having a hollow part may be used as the gap-filling member in order to further reduce mass.

### EFFECT OF THE INVENTION

In the present invention, a gap-filling member made of an impermeable material that does not let lubricant through is fitted in the annular gap portion surrounding the externally toothed gear. By properly setting the contour shape of the gap-filling member and forming the gap-filling member using a material having a small unit weight, the gap portion can be filled in and lubricant can be prevented from pooling unnecessarily without causing any unnecessary increase in mass.

### BRIEF DESCRIPTION OF THE DRAWINGS

FIG. 1 is a schematic longitudinal cross-sectional view of a rotary actuator according to an embodiment of the present invention; and
FIG. 2 is an explanatory drawing of another example of a gap-filling ring, which is a gap-filling member.

### MODE FOR CARRYING OUT THE INVENTION

An embodiment of the present invention shall be described below with reference to the accompanying drawings. The embodiment described below presents one example of the present invention and is not intended to limit the present invention to the configuration of the embodiment.

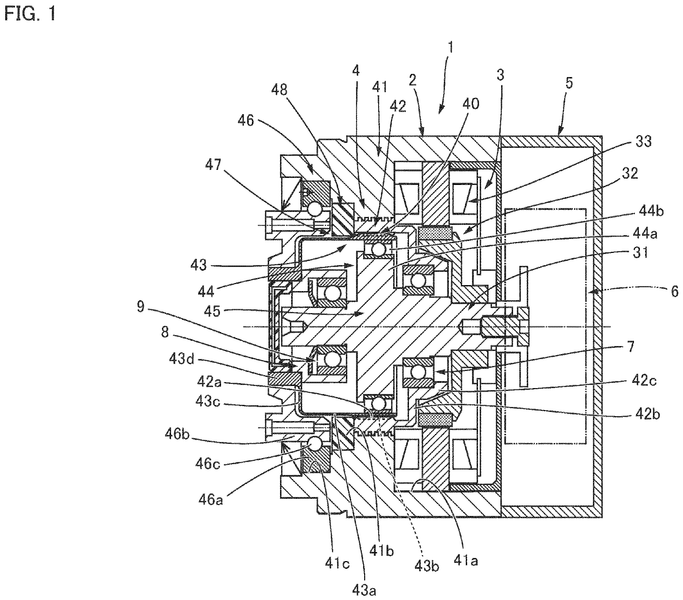

FIG. 1 is a schematic longitudinal cross-sectional view of a rotary actuator according to an embodiment of the present invention. A rotary actuator 1 is constituted of a cylindrical actuator housing 2 and, assembled inside the actuator housing 2, a motor 3 and a strain wave gearing 4. An encoder case 5 is attached to a motor-side end of the actuator housing 2, and a motor encoder 6 is assembled inside the encoder case 5 (shown as a box drawn with imaginary lines in the drawing). The motor 3 has a typical configuration and includes a motor shaft 31, a motor rotor 32 attached to the motor shaft 31, and a motor stator 33 attached to a motor-side inner peripheral surface portion of the actuator housing 2.

The strain wave gearing 4 includes a device housing 41 formed as a part of the actuator housing 2, a rigid internally toothed gear 42 attached to the device housing 41, a flexible externally toothed gear 43 disposed coaxially inside the internally toothed gear, a wave generator 44 fitted inside the externally toothed gear 43, and an input shaft 45 attached coaxially to the wave generator 44. In this example, the input shaft 45 is integrally formed with the motor shaft 31. The externally toothed gear 43 is rotatably supported by the device housing 41 via a main bearing 46. An annular gap portion 47 surrounding the externally toothed gear 43 is formed between the device housing 41, the internally toothed gear 42, the externally toothed gear 43, and the main bearing 46. A gap-filling ring 48 (gap-filling member) is attached to the gap portion 47 in order to substantially fill in the gap portion 47.

To explain further, the cylindrical device housing 41 includes, formed along the axial direction from the motor 3 side, a smallest-diameter inner peripheral surface portion 41a for attaching the internally toothed gear, an inner peripheral surface portion 41b for forming a gap having a larger inner diameter than the portion 41a, and an inner peripheral surface portion 41c for attaching the main bearing having a larger inner diameter than the portion 41b.

The internally toothed gear 42 of this example is an annular component of rectangular cross section, the outer peripheral surface portion thereof is joined by casting to the inner peripheral surface portion 41a of the device housing 41 to integrate the internally toothed gear 42 with the device housing 41, and internal teeth 42a are formed on a circular inner peripheral surface of the internally toothed gear 42. In addition, a disc-form partition plate 42b that partitions an internal space of the strain wave gearing 4 and an internal space of the motor 3 is integrally formed on the internally toothed gear 42. The partition plate 42b extends from a motor-side end surface of the internally toothed gear 42, and a bearing holder 42c extending toward the motor is formed on an inner peripheral edge part of the partition plate 42b. A shaft portion of the input shaft 45 extending from the wave generator 44 toward the motor is supported by a bearing 7 mounted on the bearing holder 42c.

The externally toothed gear 43 is cup-shaped and includes a cylindrical part 43a capable of flexing in the radial direction, external teeth 43b formed on an outer peripheral surface portion on an open-end side, which is one end of the cylindrical part 43a, a diaphragm 43c extending radially inward from the other end of the cylindrical part 43a, and an annular rigid boss 43d integrally formed on an inner peripheral edge of the diaphragm 43c. Inside the cylindrical part 43a, a cylindrical bearing holder 8 is attached to the boss 43d, and the shaft portion of the input shaft 45 extending from the wave generator 44 to the side opposite the motor is supported by a bearing 9 mounted on the bearing holder 8.

The wave generator 44 includes an elliptically contoured cam plate 44a formed integrally with the input shaft 45, and a wave generator bearing 44b mounted on the ellipsoidal outer peripheral surface of the cam plate 44a. The portion of the externally toothed gear 43 where the external teeth 43b are formed is caused to flex into an ellipsoidal shape by the wave generator 44, and the external teeth 43b positioned at both ends of the long axis of the ellipsoidal shape mesh with the internal teeth 42a. When the cam plate 44a of the wave generator 44 rotates, the meshing positions of the two gears move in the circumferential direction, and relative rotation according to the difference in the number of teeth occurs between the two gears. In the present example, the internally toothed gear 42 is a fixed-side member attached to the device housing 41, and the externally toothed gear 43 rotates. The rotation of the externally toothed gear 43 is outputted as reduced rotation to a load side (not shown) .

The main bearing 46 includes an outer ring 46a attached to the inner peripheral surface portion 41c of the device housing 41, an inner ring 46b attached to the boss 43d of the externally toothed gear 43, and a plurality of rolling elements 46c fitted between these rings.

The gap portion 47 is formed between the internally toothed gear 42 and the main bearing 46, which face each other in the axial direction, between the cylindrical part 43a of the externally toothed gear 43 and the inner peripheral surface portion 41b of the device housing 41 surrounding the cylindrical part 43a. The gap portion 47 communicates with meshing portions 40 of the internally toothed gear 42 and the externally toothed gear 43, and communicates with a raceway of the rolling elements 46c formed between the outer ring 46a and the inner ring 46b of the main bearing 46.

The gap-filling ring 48 mounted on the gap portion 47 is formed of a lightweight material having a smaller weight per unit volume than the material of the device housing 41, the internally toothed gear 42, and the main bearing 46. In the present example, a resin ring of rectangular cross section is used. The gap-filling ring 48 is an impermeable ring that does not let through the lubricant applied or supplied to the meshing portions 40 of the internally toothed gear 42 and the externally toothed gear 43 and the sliding portion (inside of the raceway) of the main bearing 46. Therefore, the gap-filling ring 48 does not absorb and retain the lubricant. In addition, the gap-filling ring 48 is fixed to the inner peripheral surface portion 41b of the device housing 41 by an adhesive or the like. A fixing means other than an adhesive can also be used. The gap-filling ring 48 is disposed so that a predetermined gap is obtained with the outer peripheral surface of the cylindrical part 43a, so that the gap-filling ring 48 does not interfere with the cylindrical part 43a of the externally toothed gear 43 caused to flex in the radial direction. When disposed in contact with the cylindrical part 43a, or when there is a possibility of contact, the gap-filling ring 48 is preferably formed of a material that can flex and deform in response to the flexure of the cylindrical part 43a.

When the strain wave gearing 4 is driven by the motor 3, the positions where the externally toothed gear 43 meshes with the internally toothed gear 42 move in the circumferential direction as the wave generator 44 rotates, and reduced rotation corresponding to the difference in the number of teeth between the two gears between the gears 42, 43 is obtained from the externally toothed gear 43. The reduced rotation of the externally toothed gear 43 is outputted from the inner ring 46b of the main bearing 46, which functions as an output shaft, to the load side (not shown).

When the strain wave gearing 4 is in a driven state, the lubricant flows through the gap portion 47. The gap portion 47 is substantially filled by the gap-filling ring 48, which is made of a lightweight material. This makes it possible to avoid the problem of lubricant pooling in the gap portion 47 and preventing proper lubrication of the portions to be lubricated, such as the meshing portions. In addition, since the gap-filling ring 48 is a lightweight resin component, the gap-filling ring 48 does not cause an increase in mass, unlike cases such as when the inner peripheral surface portion 41b of the device housing 41 is extended inward to prevent the creation of a gap portion 47 of large internal volume.

The shape and internal volume of the gap portion 47 change depending on the mechanical properties, shapes, layout, etc., demanded of the externally toothed gear 43, the main bearing 46, etc. For example, the axial width dimension and radial height dimension of the gap vary depending on the axial length of the cylindrical part 43a of the externally toothed gear 43, the width of the external teeth, and the size and axial placement of the main bearing. The shape and material of the gap-filling member 48 for filling the gap portion 47 can be appropriately set accordingly.

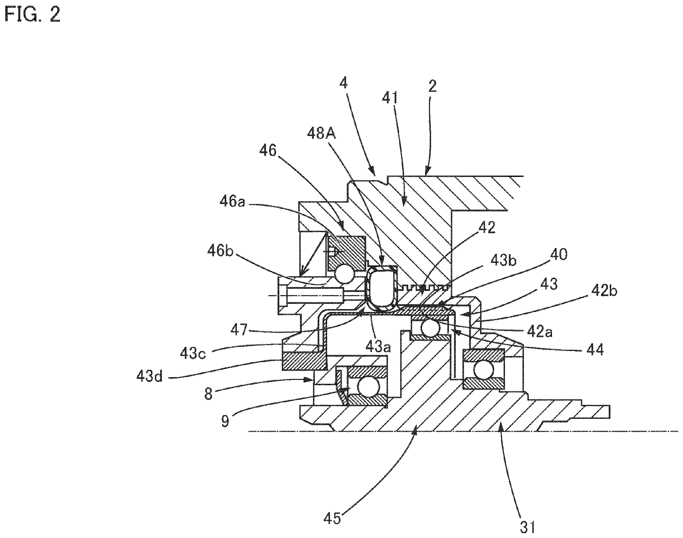

In the present example, a rectangular solid member is used as the gap-filling ring 48. A hollow member or a member having a hollow part can also be used to reduce the weight of the gap-filling ring 48. For example, as shown in FIG. 2, a resin hollow ring 48A having a rectangular cylindrical cross section can be used as the gap-filling ring 48.

Furthermore, a single gap-filling ring 48 is provided in the present example. A plurality of gap-filling rings, two or more of the same or different shapes, can be provided in certain instances.

## Claims

1. A strain wave gearing comprising:
a device housing;
a rigid internally toothed gear attached to the device housing;
a flexible externally toothed gear disposed inside the device housing and the internally toothed gear;
a wave generator that causes the externally toothed gear to flex in a radial direction and partially mesh with the internally toothed gear;
a main bearing that is fitted between the device housing and the externally toothed gear, and that supports the externally toothed gear so as to be able to rotate in relation to the device housing;
an annular gap portion that is formed between the device housing, the internally toothed gear, the externally toothed gear, and the main bearing, and that surrounds the externally toothed gear; and
a gap-filling member that is inserted in the gap portion in order to fill in the gap portion, and that is attached to at least one of the device housing and the internally toothed gear,
the gap-filling member being formed of an impermeable material that does not let through any lubricant applied or supplied to meshing portions of the internally toothed gear and the externally toothed gear or a sliding portion of the main bearing.

2. The strain wave gearing according to claim 1, wherein
the gap-filling member is formed of a lightweight material having a smaller weight per unit volume than the material of the device housing and the internally toothed gear.

3. The strain wave gearing according to claim 1, wherein
the gap-filling member is a hollow member or a member having a hollow part.

4. The strain wave gearing according to claim 1, wherein
the gap-filling member is formed of a resin material.

5. The strain wave gearing according to claim 1, wherein
the gap-filling member has flexibility sufficient to follow radial flexure of the externally toothed gear.

6. The strain wave gearing according to any one of claims 3 to 5, wherein:
the externally toothed gear has a cylindrical part capable of flexing in the radial direction, external teeth formed on an outer peripheral surface of the cylindrical part, a diaphragm extending radially inward from one end of the cylindrical part, and a rigid boss formed on an inner peripheral edge of the diaphragm;
the internally toothed gear is a housing-integrated component joined by casting to an inner peripheral region of the device housing;
the main bearing has an outer ring attached to the device housing and an inner ring attached to the boss of the externally toothed gear;
the gap portion is formed between the internally toothed gear and the main bearing, which face each other in the axial direction, between the cylindrical part of the externally toothed gear and an inner peripheral surface portion of the device housing surrounding the cylindrical part; and
the gap-filling member is attached to at least one of the device housing and the internally toothed gear, and is formed of a lightweight material having a smaller weight per unit volume than the material of the device housing, the internally toothed gear, and the main bearing.
